# EUROPEAN PATENT APPLICATION

(11) **EP 3 135 986 A1**
(43) Date of publication of application: **01.03.2017**
(21) Application number: 14889963.6
(22) Date of filing: 15.12.2014
(51) Int. Cl.: F21S 8/10, F21V 31/03

(54) **AERATION MEMBER AND AERATION DEVICE**

(30) Priority: 23.04.2014 JP 2014089237
(71) Applicant: Nitto Denko Corporation, Ibaraki-shi, Osaka 567-8680 (JP)
(72) Inventor: TEZUKA, Teppei, Ibaraki-shi Osaka 567-8680 (JP); YANO, Youzou, Ibaraki-shi Osaka 567-8680 (JP)
(74) Representative: Hoffmann Eitle
(86) International application number: PCT/JP2014/083143
(87) International publication number: WO 2015/162822

(57) **Abstract**

The aeration member 20 is a porous body for discharging water vapor in the interior of a closed lamp housing. The aeration member 20 has small pore diameter structures 21 for preventing infiltration of liquid water and contaminants into the lamp housing while forming a flow path for discharging the water vapor from the interior of the lamp housing to the exterior, and large pore diameter structures 22 having larger diameters than that of the small pore diameter structures 21 and being provided in such a manner as to communicate with the small pore diameter structures 21. The above allow for the provision of an aeration member and an aeration device that can promote the transfer of water vapor between the interior and the exterior of the housing.

## Description

### Technical Field

The present invention relates to an aeration member and an aeration device.

### Background Art

Conventionally, in a lamp for a vehicle, an aeration opening is provided to a housing for the purpose of preventing deformation or breakage of the housing due to a difference in temperature between an interior and an exterior of the housing, etc. Then, generally, an aeration member for preventing infiltration of water or dust into the interior of the housing is attached to the aeration opening.

For example, Patent Document 1 describes that a filter member formed of a fine porous film manufactured by a stretching method, an extracting method or the like is provided to an aeration opening formed in a housing of a vehicle lamp, to thereby improving a water proofing property or a dust proofing property of the housing. Then, it is described that, as the fine porous film, for example, a porous film made of polytetrafluoroethylene with a pore diameter of 0.01 µm to 10 µm is used.

### Citation List

### Patent Literature

Patent Document 1: Japanese Patent Application Laid-Open Publication No. 2001-143524

### Summary of Invention

### Technical Problem

By the way, in a vehicle lamp, when the outside air temperature is low or humidity in a housing is high, condensation occurs in the housing, and accordingly, fogging of a lens is caused in some cases. For suppressing occurrence of fogging of the lens, and for defogging when fogging occurs in the lens, it is preferable to quickly discharge water vapor from the interior to the exterior of the housing via an aeration member.

An object of the present invention is to provide an aeration member and an aeration device that can prompt discharge of water vapor from an interior of a housing to an exterior thereof.

### Solution to Problem

Under such an object, an aeration member 20, to which the present invention is applied, is an aeration member 20 of a porous body that discharges water vapor in an interior of a closed lamp housing 8, the aeration member 20 including: a small pore diameter structure 21 that prevents infiltration of liquid water and a contaminant into the interior of the lamp housing 8 and forms a flow path for discharging the water vapor from the interior of the lamp housing 8 to the exterior; and a large pore diameter structure 22 having a larger diameter than that of the small pore diameter structure 21, the large pore diameter structure 22 being provided in communication with the small pore diameter structure 21.

Here, a pore diameter D1 of the small pore diameter structure 21 is 0.5 µm or more and 50 µm or less.

Moreover, a pore diameter D2 of the large pore diameter structure 22 is 5 µm or more and 100 µm or less.

From another point of view, an aeration member 20, to which the present invention is applied, is an aeration member 20 of a porous body for performing aeration between an interior 8 of a closed housing and an exterior, the aeration member 20 including: a small pore diameter structure 21 that prevents infiltration of liquid water and a contaminant into the interior 8 of the housing, and causes water vapor to permeate from the interior 8 of the housing to the exterior; and a large pore diameter structure 22 having a larger diameter than that of the small pore diameter structure 21, wherein the aeration member 20 is formed as a molded article with a thickness having a self-standing property as a shape.

Here, the thickness t1 of the aeration member 20 is 10 mm or less.

Moreover, the thickness t1 of the aeration member 20 is 1 mm or more.

Further, the aeration member 20 is a molded article with a concave and a convex, and the concave and the convex increase a surface area and widen a permeation area of the water vapor.

Further, from still another point of view, an aeration device, to which the present invention is applied, is an aeration device for discharging water vapor in a closed lamp 1, the aeration device including: a lamp housing 2 that is closed and includes at least an aeration opening 9; and an aeration member 20 provided to the aeration opening 9, wherein the aeration member 20 includes: a small pore diameter structure 21 in which a pore diameter is 0.5 µm or more and 50 µm or less; and a large pore diameter structure 22 that is provided in communication with the small pore diameter structure 21 and has a larger diameter than that of the small pore diameter structure 21.

Note that the above signs in this field are provided for exemplification in describing the present invention, and the present invention is not restricted by these signs.

### Advantageous Effects of Invention

According to the present invention, it is possible to provide the aeration member and the aeration device that can promote transfer of water vapor between the interior and the exterior of the housing.

### Brief Description of Drawings

FIG. 1 is a diagram showing an overall configuration of a vehicle lamp to which an exemplary embodiment is applied;
FIGS. 2A and 2B are diagrams for illustrating a configuration of an aeration unit to which the exemplary embodiment is applied;
FIG. 3 is an enlarged cross-sectional view cutting an aeration member in a thickness direction (aeration direction); and
FIGS. 4A and 4B are diagrams showing another embodiment of the aeration member.

### Description of Embodiments

Hereinafter, an exemplary embodiment according to the present invention will be described in detail with reference to attached drawings.

### [Overall configuration of vehicle lamp]

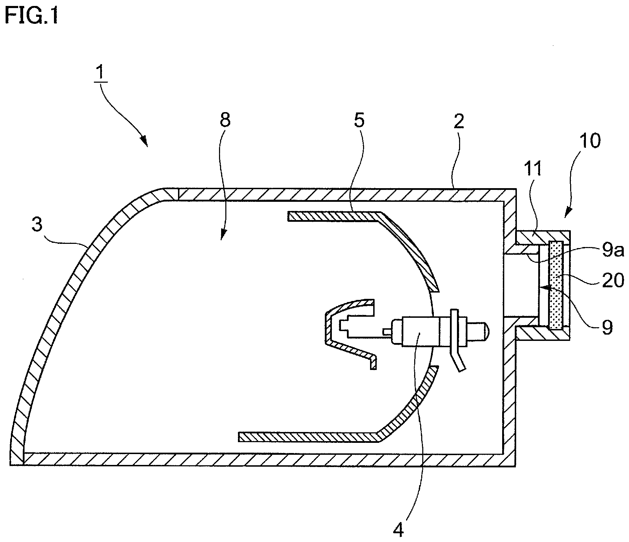

FIG. 1 is a diagram showing an overall configuration of a vehicle lamp 1 to which the exemplary embodiment is applied.

The vehicle lamp 1 to which the exemplary embodiment is applied is used as a head lamp, a rear lamp, a brake lamp, a fog lamp, a direction indicator lamp, a taxing lamp, a parking lamp, etc., of various kinds of vehicles typified by, for example, automobiles. FIG. 1 shows a specific example of these lamps.

The vehicle lamp 1 shown in FIG. 1 includes a housing 2 that protects electrical components of the vehicle and a lens 3 that is attached to the housing 2 to emit light at a proper angle, in such a manner to concentrate light toward the front of the lamp. By the housing 2 and the lens 3, an interior 8 of the closed housing (lamp housing interior) of the vehicle lamp 1, and thereby a water proofing property or a dust proofing property for each electrical component in the housing interior 8 is improved. However, the housing interior 8 is not in an absolute sealed state; aeration is possible via an aeration opening 9. The aeration opening 9 is configured with a convex portion 9a in a cylindrical shape protruding outwardly from the housing 2. The housing interior 8 is provided with, as one of the electrical components, a bulb 4 that emits light and a reflector 5 that reflects light emitted from the bulb 4 in the lateral direction or rear direction toward the front.

Moreover, in the exemplary embodiment, the vehicle lamp 1 includes, as one of ventilation means, an aeration unit 10 that performs transfer of air between interior and exterior of the lamp, and in particular, that is able to discharge water vapor in the housing interior 8 to the exterior of the vehicle lamp 1. Then, the vehicle lamp 1 provided with the aeration unit 10 can be grasped as a mode of an aeration device.

### [Configuration of aeration unit]

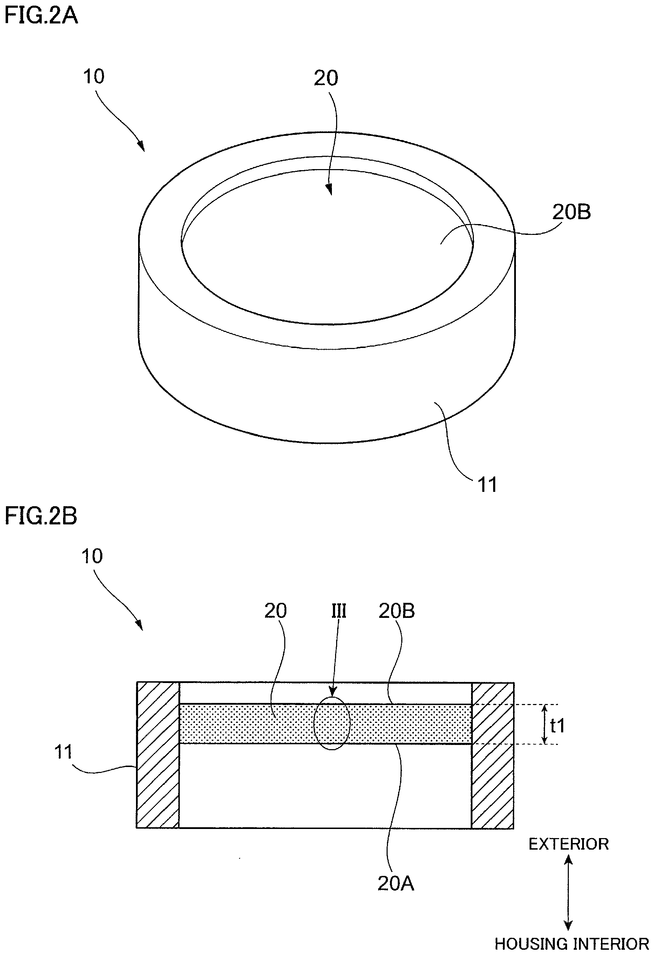

Subsequently, the aeration unit 10 of the exemplary embodiment will be described. FIGS. 2A and 2B are diagrams for illustrating the configuration of the aeration unit 10 to which the exemplary embodiment is applied; FIG. 2A is a perspective view of the aeration unit 10, and FIG. 2B is a cross-sectional view in which the aeration unit 10 is cut along the aeration direction in the aeration unit 10.

As shown in FIGS. 1, 2A and 2B, the aeration unit 10 of the exemplary embodiment includes an aeration member 20 that performs aeration between the housing interior 8 of the vehicle lamp 1 and the exterior of the vehicle lamp 1, and a support member 11 that is attached to the convex portion 9a forming the aeration opening 9 of the vehicle lamp 1 to support the aeration member 20.

The support member 11 of the exemplary embodiment has, for example, a cylindrical shape as a whole, and a through hole in a cylindrical columnar shape is formed inside thereof. Then, with reference to the above-described FIG. 1, the support member 11 is attached with one end portion thereof being fitted over an outer circumference of the convex portion 9a constituting the aeration opening 9 formed in the vehicle lamp 1, to thereby form an aeration route continued from the aeration opening 9 of the vehicle lamp 1.

Moreover, the support member 11 supports the aeration member 20 at an inner circumference of the through hole. To put it another way, the support member 11 of the exemplary embodiment is in a state in which the aeration route thereof is blocked by the aeration member 20. Note that the method of attaching the aeration member 20 to the support member 11 is not particularly limited; for example, attachment by a deposition method or insertion method, such as snap-fitting, may be possible, or attachment by an adhesive tape or a bonding agent may also be possible.

Moreover, an inner diameter of the support member 11 (namely, a diameter of the aeration route by the support member 11) is not particularly limited; however, the diameter can be set at, for example, of the order of 10 mm to 70 mm in accordance with the size of the vehicle lamp 1 to which the aeration unit 10 is attached.

Note that, when the inner diameter of the support member 11 is excessively small, since an aeration area in the aeration unit 10 becomes small, water vapor becomes less likely to permeate from the housing interior 8 of the vehicle lamp 1 to the exterior, and thereby effect of suppressing fogging of the vehicle lamp 1 is likely to be reduced.

### [Configuration of aeration member]

The aeration member 20 of the exemplary embodiment has, as shown in FIG. 2A or the like, a disk-like shape as a whole, for example. In other words, the aeration member 20 of the exemplary embodiment includes two facing circular planes 20A, 20B, and a side surface connecting the plane 20A and the plane 20B.

Then, in a state in which the aeration unit 10 is attached to the aeration opening 9 of the vehicle lamp 1, one of the planes of the aeration member 20 (in this specific example, the plane 20A) faces the housing interior 8 of the vehicle lamp 1, whereas, the other plane (in this specific example, the plane 20B) faces the exterior of the vehicle lamp 1. Note that, as will be described later, the shape of the aeration member 20 is not limited to the disk-like shape shown in FIG. 2A.

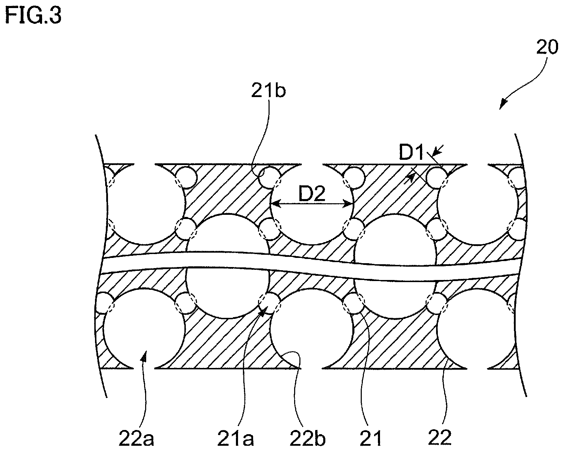

Moreover, the aeration member 20 of the exemplary embodiment is made of a resin of a porous body. More specifically, the aeration member 20 is made of a resin of a porous body having an open-cell structure in which plural pores with different pore diameters (a small pore diameter structure 21 and a large pore diameter structure 22 to be described later; refer to FIG. 3) communicate with one another.

Then, the aeration member 20 performs aeration between the housing interior 8 of the vehicle lamp 1 and the exterior of the vehicle lamp 1, and suppresses infiltration of foreign matters, such as dust, water in the liquid state (liquid water) or the like into the housing interior 8 of the vehicle lamp 1. Moreover, the aeration member 20 causes the water vapor in the housing interior 8 to permeate through the vehicle lamp 1 to be discharged to the exterior thereof, to thereby suppress occurrence of fogging of the lens 3.

As a material of the aeration member 20, for example, a thermoplastic resin, such as, polybutyrene terephthalate (PBT), polybutyrene naphthalate, polyethylene, polystyrene, acrylonitrile-styrene copolymer resin (AS resin), acrylonitrile-butadiene-styrene copolymer resin (ABS resin), polypropylene, polycarbonate and polyacetal, can be used.

Of these, from a standpoint of strength, a heat resisting property or the like of the aeration member 20, it is preferable to use PBT.

The aeration member 20 of the exemplary embodiment is a molded article in a self-standing shape as a single item (in other words, in a state being detached from the support member 11). To put it another way, in the exemplary embodiment, the thickness of the aeration member 20 along the aeration direction (hereinafter, simply referred to as the thickness of the aeration member 20) t1 is a thickness to the extent that the aeration member 20 has a self-standing property as a shape. The "thickness to the extent of having a self-standing property as a shape" means that the aeration member 20 is not a film-like article, and, for example, means to allow the extent to be capable of maintaining a constant shape even though there is no frame body, such as the support member 11. However, even in such a case, the thickness is not limited to the extent that there is no deformation at all when a frame body is removed; the thickness is meant to the extent capable of being treated as a single item in operations of attachment or the like. Of course, the purport does not exclude the case of using a frame body. In some cases, the shape can be stronger by using a frame body.

Moreover, the aeration member 20 of the exemplary embodiment may have a water repellent and oil repellent coating on the surface thereof. By providing the water repellent and oil repellent coating to the aeration member 20, adherence of dust containing oil to the aeration member 20 is suppressed, and thereby decrease in permeability of air or water vapor through the aeration member 20 is suppressed.

As the water repellent and oil repellent coating provided to the aeration member 20 in the exemplary embodiment, for example, a publicly-known water repellent and oil repellent treating agent of fluoride series or silicone series can be used. Of these, it is preferable to use the water repellent and oil repellent treating agent of fluoride series having high water repellency and oil repellency. The water repellent and oil repellent treating agent of fluoride series is not particularly limited; however, for example, a polymer having perfluoro-alkyl group can be preferably used.

Subsequently, a configuration of the aeration member 20 of the exemplary embodiment will be described in more detail. FIG. 3 is an enlarged cross-sectional view cutting the aeration member 20 in the thickness direction (aeration direction), and is an enlarged view of the III portion in FIG. 2B.

As shown in FIG. 3, the aeration member 20 of the exemplary embodiment is made of a porous body in which plural pores with different pore diameters (small pores 21a, large pores 22a) are formed. Then, the aeration member 20 has plural small pore diameter structures 21 and plural large pore diameter structures 22 with diameters larger than those of the small pore diameter structures 21.

Specifically, the small pore diameter structures 21 are configured with wall surfaces 21b enclosing small pores 21a formed in the aeration member 20, and the large pore diameter structures 22 are configured with wall surfaces 22b enclosing large pores 22a formed in the aeration member 20.

The shape of each of the small pore diameter structures 21 and the large pore diameter structures 22 (shape of the small pore 21a and the large pore 22a) is not particularly limited as long as the shape is regarded to be substantially grainy, such as a spherical shape, an elliptic body, a spindle body, a polygonal body and the like.

Then, the aeration member 20 of the exemplary embodiment includes an open-cell structure in which the small pore diameter structure 21 and the large pore diameter structure 22 communicate with each other.

Here, a state in which the small pore diameter structure 21 and the large pore diameter structure 22 communicate with each other refers to a state in which water vapor, air, etc., can circulate between the small pore diameter structure 21 and the large pore diameter structure 22. To put it another way, it is the state in which the small pore 21a enclosed by the small pore diameter structure 21 and the large pore 22a enclosed by the large pore diameter structure 22 form a continuous space.

Note that, in the aeration member 20 of the exemplary embodiment, of the plural small pore diameter structures 21 and the plural large pore diameter structures 22, it is sufficient that at least a part of each thereof communicates with each other. In other words, not all the small pore diameter structures 21 may communicate with the large pore diameter structures 22, and not all the large pore diameter structures 22 may communicate with the small pore diameter structures 21.

Moreover, in the aeration member 20, as shown in FIG. 3, it may be possible that the plural large pore diameter structures 22 communicate with a single small pore diameter structure 21, and the plural small pore diameter structures 21 communicate with a single large pore diameter structure 22.

Further, in the aeration member 20, there may be a portion in which the plural small pore diameter structures 21 communicate with one another, and there may be a portion in which the plural large pore diameter structures 22 communicate with one another.

In the aeration member 20 of the exemplary embodiment, the small pore diameter structures 21 form a flow path for preventing infiltration of the contaminants, such as dust, or water in the liquid state (liquid water) or the like into the housing interior 8 (refer to FIG. 1) and for discharging water vapor from the housing interior 8 to the exterior of the vehicle lamp 1 (refer to FIG. 1).

Moreover, in the aeration member 20 of the exemplary embodiment, the large pore diameter structures 22 are provided to communicate with the small pore diameter structures 21, and accordingly, together with the small pore diameter structures 21, the large pore diameter structures 22 form the flow path for discharging water vapor from the housing interior 8 to the exterior of the vehicle lamp 1. The large pore diameter structures 22 have a function of making the flow path formed by the small pore diameter structures 21 shorter by communicating with the small pore diameter structures 21, to thereby promote discharge of the water vapor from the housing interior 8 to the exterior of the vehicle lamp 1.

In the exemplary embodiment, the flow path formed by the small pore diameter structures 21 and the large pore diameter structures 22 communicating with each other is provided to be connected from the plane 20A side, which is one of the planes of the aeration member 20 (refer to FIG. 2B), to the plane 20B side, which is the other one of the planes (refer to FIG. 2B). In other words, in a state in which the aeration unit 10 is attached to the housing 2 of the vehicle lamp 1 (refer to FIG. 1), the housing interior 8 and the exterior of the vehicle lamp 1 are connected via the flow path formed by the small pore diameter structures 21 and the large pore diameter structures 22.

This allows the air and water vapor to move between the housing interior 8 and the exterior of the vehicle lamp 1 via the aeration member 20 in the state in which the aeration unit 10 is attached to the vehicle lamp 1.

Here, the thickness t1 of the aeration member 20 (refer to FIG. 2B) is, though there is a difference depending on the material used for the aeration member 20, the shape of the aeration member 20, the object of application of the aeration member 20 or the like, for example, preferably in a range of 1 mm or more.

By setting the thickness of the aeration member 20 to 1 mm or more, it becomes possible to secure a sufficiently long open-cell structure in which the small pore diameter structures 21 and the large pore diameter structures 22 communicate with each other, and to promote discharge of water vapor from the housing interior 8 to the exterior of the vehicle lamp 1.

Moreover, the thickness t1 of the aeration member 20 is, though there is a difference depending on the material used for the aeration member 20, the shape of the aeration member 20, the object of application of the aeration member 20 or the like, for example, preferably in a range of 10 mm or less.

When the thickness t1 of the aeration member 20 is larger than 10 mm, since the distance from the housing interior 8 to the exterior of the vehicle lamp 1 (refer to FIG. 1) becomes longer, the time required to discharge water vapor to the exterior of the vehicle lamp 1 becomes longer. In this case, the time until fogging of the lens 3 of the vehicle lamp 1 (refer to FIG. 1) is cleared is apt to be longer.

However, the thickness t1 of the aeration member 20 is not limited to the above range as long as the thickness is able to keep the strength as a molded article, to suppress fogging in the vehicle lamp 1 or the like by permeating the water vapor, and to quickly eliminate fogging when the fogging occurs.

Here, as shown in FIG. 3, if it is assumed that the pore diameter of the small pore diameter structure 21 is a first pore diameter D1 and the pore diameter of the large pore diameter structure 22 is a second pore diameter D2, the second pore diameter D2 is large as compared to the first pore diameter D1 (D1 < D2).

The first pore diameter D1 is preferably smaller than the second pore diameter D2, and in a range of 0.5 µm or more and 50 µm or less. If the first pore diameter D 1 is less than 0.5 µm, it is hard for water vapor to permeate through the flow path formed by the small pore diameter structures 21, and therefore, it becomes difficult to quickly eliminate fogging in the vehicle lamp 1. If the first pore diameter D 1 is larger than 50 µm, there is a possibility that foreign matters, such as dust, pass through the aeration member 20 and infiltrate into the housing interior 8 of the vehicle lamp 1.

Moreover, the second pore diameter D2 is preferably larger than the first pore diameter D1, and in a range of 5 µm or more and 100 µm or less. If the second pore diameter D2 is less than 5 µm, effect of promoting discharge of water vapor by the large pore diameter structures 22 becomes insufficient in some cases. If the second pore diameter D2 is 100 µm or more, there is a possibility that the strength of the aeration member 20 is decreased.

Further, in the aeration member 20 of the exemplary embodiment, though depending on the size of the first pore diameter D1 and the second pore diameter D2, it is preferable that the second pore diameter D2 is more than twice the first pore diameter D1, and it is preferable that the second pore diameter D2 is more than five times the first pore diameter D 1.

If the second pore diameter D2 is less than twice the first pore diameter D1, since a difference in the pore diameters between the small pore diameter structure 21 and the large pore diameter structure 22 is small, a pumping effect, which will be described later, due to the open-cell structure by the small pore diameter structures 21 and the large pore diameter structures 22 is insufficient; accordingly, there is a possibility that discharge of water vapor is less likely to be prompted.

Note that, in the aeration member 20 of the exemplary embodiment, the first pore diameter D 1 and the second pore diameter D2 can be measured by, for example, the following method.

That is, a scanning electron microscope (SEM) photograph of a cross section of the aeration member 20 is taken, and an area of pores existing within a predetermined range (for example, a range of square measuring 200 µm per side) in the SEM photograph is analyzed by commercially available image processing software or the like. Note that, when plural pores communicate with one another, the area of the pores is analyzed on the assumption that the respective pores do not communicate with one another. Then, based on the area of the pores having been analyzed, a circle equivalent diameter of each of the pores and distribution thereof (number distribution) are obtained. In the exemplary embodiment, as the pores formed in the aeration member 20, there exist the small pores 21a corresponding to the small pore diameter structures 21 and the large pores 22a corresponding to the large pore diameter structures 22, and therefore, obtained distribution of circle equivalent diameter generally has two peaks. In the exemplary embodiment, of the peak values in the obtained distribution of circle equivalent diameter, the smaller value can be referred to as the first pore diameter D 1, and the larger value can be referred to as the second pore diameter D2.

By the way, conventionally, in the vehicle lamp 1, such as an automobile lamp, condensation or fogging of the lens 3 (a phenomenon in which the lens 3 becomes white and cloudy due to minute water droplets) caused by moisture in the housing interior 8 has been a problem. As a method of suppressing moisture in the housing interior 8 of the vehicle lamp 1, hermetical sealing of the housing 2 of the vehicle lamp 1 is most effective; however, since plastic constituting the lens 3 or the housing 2 has hygroscopicity, it is impossible to completely suppress infiltration of water into the housing interior 8. Moreover, if the housing 2 of the vehicle lamp 1 is hermetically sealed, it becomes difficult to discharge the infiltrated water (moisture) to the exterior of the vehicle lamp 1.

Moreover, if the housing 2 of the vehicle lamp 1 is hermetically sealed, the housing interior 8 is raised to high temperature due to heat generated by the bulb 4 or the like of the vehicle lamp 1, and if the air in the housing interior 8 is expanded, there is a possibility of breakage of the housing 2.

Consequently, the housing 2 of the vehicle lamp 1 is usually not hermetically sealed; in many cases, the aeration opening 9 for performing aeration with the exterior is provided to the vehicle lamp 1 and the aeration member for suppressing infiltration of liquid water or contaminants into the housing interior 8 is provided to the aeration opening 9. Then, in the vehicle lamp 1 like this, for example, in the case of low outside air temperature or high humidity in the housing interior 8, condensation occurs in the housing interior 8 of the vehicle lamp 1, and fogging of the lens 3 is likely to occur.

To improve fogging of the lens 3 as described above, it is preferable to promote transfer of water vapor between the housing interior 8 of the vehicle lamp 1 and surrounding atmosphere in the exterior of the vehicle lamp 1, to quickly make hydrothermal environment inside and outside the vehicle lamp 1 constant, and to reduce the humidity in the housing interior 8.

In the exemplary embodiment, as described above, by using a porous body having an open-cell structure in which the small pore diameter structures 21 and the large pore diameter structures 22 communicate with each other as the aeration member 20 provided to the aeration opening 9 of the vehicle lamp 1, it becomes possible to quickly discharge water vapor to the exterior of the vehicle lamp 1. This makes it possible to suppress occurrence of fogging of the lens 3 in the vehicle lamp 1, and even when the fogging occurs on the lens 3, it is possible to quickly eliminate the fogging.

### [Action by aeration member]

Subsequently, action of the aeration member 20 of the exemplary embodiment will be specifically described.

In the vehicle lamp 1, in which the aeration unit 10 (aeration member 20) is attached to the aeration opening 9, when the humidity in the housing interior 8 is high as compared to that in the exterior of the vehicle lamp 1, water vapor moves through the aeration member 20 from the housing interior 8 toward the exterior of the vehicle lamp 1 for making up the difference in humidity between the housing interior 8 and the exterior of the vehicle lamp 1. More specifically, water vapor moves through the flow path formed by the small pore diameter structures 21 and the large pore diameter structures 22 in the aeration member 20 from the housing interior 8 toward the exterior of the vehicle lamp 1.

Here, in the flow path formed in the aeration member 20, when water vapor moves from the large pore diameter structure 22 to the small pore diameter structure 21, since the flow path are is narrowed in the small pore diameter structure 21, a moving speed of the water vapor is increased. Therefore, from the small pore diameter structure 21, the water vapor is pushed out toward the large pore diameter structure 22 communicating with the further downstream side (toward the exterior of the vehicle lamp 1) (a pumping effect).

As a result, in the aeration member 20 of the exemplary embodiment, in which the flow path of water vapor is formed by communication of the small pore diameter structure 21 and the large pore diameter structure 22, permeation of water vapor through the aeration member 20 is promoted as compared with, for example, a case in which the flow path of water vapor is formed by plural pores having substantially uniform pore diameters.

Then, it becomes possible for the aeration member 20 to quickly discharge water vapor from the housing interior 8 to the exterior of the vehicle lamp 1, and to suppress occurrence of fogging of the lens 3 in the vehicle lamp 1. Moreover, even when fogging occurs on the lens 3, it becomes possible to quickly eliminate the fogging of the lens 3.

Moreover, in the aeration member 20 of the exemplary embodiment, as shown in FIG. 3, the plural small pore diameter structures 21 and large pore diameter structures 22 communicate with each other, and accordingly, a state in which the permeation route of water vapor is continued in a net-like appearance is brought about. Consequently, in the aeration member 20, more permeation routes of water vapor are formed as compared to the case in which the present configuration is not employed. As a result, it is easier for water vapor to permeate from the housing interior 8 to the exterior of the vehicle lamp 1, and therefore, it becomes possible to discharge water vapor from the housing interior 8 to the exterior of the vehicle lamp 1 more quickly.

### [Another embodiment of aeration member]

Note that, as long as the aeration member 20 is a molded article including the open-cell structure in which the small pore diameter structures 21 and the large pore diameter structures 22 communicate with each other, the shape thereof is not limited to the disk-like shape shown in FIG. 2A, and is able to be appropriately selected in accordance with the shape of the vehicle lamp 1 or the like, to which the aeration member 20 is attached. For example, the shape of the aeration member 20 may be a polygonal columnar shape, such as a quadrangular prism, spherical shape or the like. Moreover, the shape of the support member 11 that supports the aeration member 20 is also not limited to the cylindrical shape shown in FIG. 2A, and is able to be appropriately selected in accordance with the shape of the aeration member 20 or the shape of the vehicle lamp 1. Further, the aeration member 20 may be directly attached to the aeration opening 9, not via the support member 11 or the like.

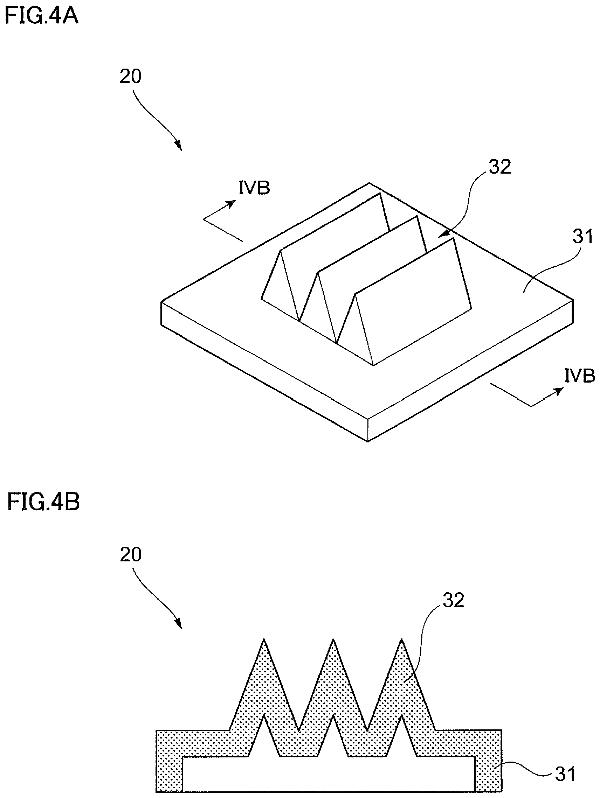

FIGS. 4A to 4B are diagrams showing another embodiment of the aeration member 20; FIG. 4A is a perspective view of the aeration member 20, and FIG. 4B is a IVB-IVB cross-sectional view in FIG. 4A.

As shown in FIGS. 4A to 4B, in the aeration member 20 of the exemplary embodiment, an attachment portion 31 that is attachable to the aeration opening 9 or the like of the vehicle lamp 1 and plural mountain-shaped protrusion portions 32 protruding from the attachment portion 31 are formed.

In the aeration member 20 of the exemplary embodiment, the aeration member 20 including the attachment portion 31 and the mountain-shaped protrusion portions 32 as a whole is configured with a porous body having an open-cell structure in which the above-described small pore diameter structures 21 (refer to FIG. 3) and large pore diameter structures 22 (refer to FIG. 3) communicate with each other.

Moreover, by formation of the mountain-shaped protrusion portions 32, both of the front surface (the upper side in FIG. 4B) and the rear surface (the lower side in FIG. 4B) of the aeration member 20 of the exemplary embodiment are surfaces with concaves and convexes; accordingly, the surface area thereof becomes large as compared with a case in which the mountain-shaped protrusion portions 32 are not formed.

Then, when the aeration member 20 is attached to the aeration opening 9 of the vehicle lamp 1, the surfaces with concaves and convexes formed by the mountain-shaped protrusion portions 32 face the housing interior 8 and the exterior of the vehicle lamp 1. Consequently, the aeration member 20 of the exemplary embodiment is able to have an increased permeation area through which water vapor from the housing interior 8 permeates as compared to the case in which the present configuration is not employed. As a result, even when the size of the aeration opening 9 is the same, by using the aeration member 20 shown in FIGS. 4A to 4B, it is possible to promote permeation of water vapor from the housing interior 8 to the exterior of the vehicle lamp 1. This makes it possible to suppress fogging of the lens 3 in the vehicle lamp 1, and when the fogging occurs on the lens 3, it becomes possible to quickly eliminate the fogging of the lens 3.

Moreover, the aeration member 20 shown in FIGS. 4A to 4B has a thickness to the extent of having the self-standing property as a shape, not via any other member (the above-described support member 11 or the like, refer to FIGS. 2A and 2B). Then, the aeration member 20 of the exemplary embodiment is able to be attached to the aeration opening 9 or the like of the vehicle lamp 1, directly with the attachment portion 31, not via any other member. This can reduce the number of components to be used for the vehicle lamp 1 and simplify the configuration of the vehicle lamp 1, as compared to the case in which the present configuration is not employed.

Note that the method of attaching the aeration member 20 to the aeration opening 9 is not particularly limited; for example, attachment by a deposition method or insertion method, such as snap-fitting, may be possible, or attachment by an adhesive tape or a bonding agent may also be possible.

### [Manufacturing method of aeration member]

Subsequently, a manufacturing method of the aeration member 20 will be described. Note that, hereinafter, as a specific example of the manufacturing method of the aeration member 20, a method of manufacturing the aeration member 20 by, the so-called "extraction method" will be described.

The manufacturing method of the aeration member 20 according to the extraction method includes: a mixing process for mixing a resin material constituting the aeration member 20, a pore forming agent that forms the small pore diameter structures 21 and the large pore diameter structures 22 and an additive that is added when needed; a molding process for applying molding processing to the mixed product obtained in the mixing process into a desired shape to obtain a molded item; and an extraction process for extracting the pore forming agent from the molded item obtained in the molding process and forming the small pore diameter structures 21 and the large pore diameter structures 22, to thereby obtain the aeration member 20.

### (Resin material)

As a material for constituting the aeration member 20, for example, a thermoplastic resin, such as, polybutyrene terephthalate (PBT), polybutyrene naphthalate, polyethylene, polystyrene, acrylonitrile-styrene copolymer resin (AS resin), acrylonitrile-butadiene-styrene copolymer resin (ABS resin), polypropylene, polycarbonate and polyacetal, can be used.

Of these, it is preferable to use PBT, which is able to obtain the aeration member 20 with high strength and a heat resisting property.

### (Pore forming agent)

As the pore forming agent, a material that is melted at the molding temperature in the molding process to be described later, and is soluble in a solvent used in the extraction process to be described later, can be used. Specific examples of such a pore forming agent include: polyhydric alcohol with carbon number of the order of 2 to 5; saccharides; water soluble alkali metal salt; and water soluble resin. Specific examples of the polyhydric alcohol with carbon number of the order of 2 to 5 include: pentaerythritol; L-erythritol; D-erythritol; meso-erythritol; pinacol; glycerin; ethylene glycol; and propylene glycol. Specific examples of the saccharides include: a monosaccharide, such as glucose, fructose, sucrose and maltose; or disaccharide. Specific examples of the water soluble alkali metal salt include: potassium chloride; sodium chloride; sodium sulfate; potassium sulfate; sodium nitrate; and potassium nitrate. Moreover, specific examples of the water soluble resin include: polyvinyl alcohol; polyethylene glycol; and polypropylene glycol.

Depending on the materials selected as the above-described pore forming agent and resin material, a dispersion state or a molten state of the pore forming agent in the resin material is different. Therefore, by extracting the pore forming agent from the resin material by the extraction process to be described later, depending on the materials selected as the pore forming agent and the resin material, pores of different sizes are formed in the resin material.

In the exemplary embodiment, to form the small pore diameter structures 21 and the large pore diameter structures 22 having different pore diameters in the aeration member 20, at least two kinds of materials are selected from the pore forming agent as described above.

In the exemplary embodiment, among the above-described pore forming agent, it is preferable to use at least one selected from ethylene glycol, propylene glycol, glycerin, polyethylene glycol and polypropylene glycol combined with pentaerythritol.

By selecting these materials, it is possible to uniformly form the open-cell structure in which the small pore diameter structures 21 and the large pore diameter structures 22 communicate with each other over the entire region of the aeration member 20. In other words, in the aeration member 20, occurrence of unevenness in the rate of pores is suppressed.

Moreover, since these materials are soluble in water, in the extraction process to be described later, water can be used as the solvent. Consequently, as compared with the case in which, for example, an organic solvent is used as the solvent, it is easy to perform cleaning or post-processing, and it is possible to simplify the manufacturing process of the aeration member 20.

### (Mixing process)

In the mixing process, the resin material constituting the aeration member 20, the pore forming agent and the additive added when needed are mixed by a publicly-known mixer. Note that, in the mixing process, depending on the materials selected as the resin material and the pore forming agent, mixing may be performed in a state in which the resin material and the pore forming agent are not melted, or mixing (kneading) may be performed in a state in which the resin material and the pore forming agent are melted.

In the mixing process, as the mixer, for example, a tumbler mixer, a Henschel mixer, an oven roll, a kneader, an intensive mixer or the like can be used.

Though a mixing ratio of the resin material and the pore forming agent differs depending on the materials used as the resin material and the pore forming agent, when PBT is used as the resin material, pentaerythritol and one selected from ethylene glycol, propylene glycol, glycerin, polyethylene glycol and polypropylene glycol are used as the pore forming agent, it is preferable to perform mixing at a rate of 40 parts by weight to 15 parts by weight of PBT, 60 parts by weight to 85 parts by weight of pentaerythritol and 0.25 parts by weight to 3.00 parts by weight of one selected from ethylene glycol, propylene glycol, glycerin, polyethylene glycol and polypropylene glycol.

When the mixing amount of the pore forming agent to the resin material is excessively small, the rate of pore of the aeration member 20 to be finally obtained becomes low, and accordingly, less open-cell structure in which the small pore diameter structures 21 and the large pore diameter structures 22 communicate with each other is generated in the aeration member 20. In this case, water vapor is less likely to permeate through the aeration member 20, and therefore, when the aeration member 20 is applied to the vehicle lamp 1, fogging of the lens 3 is hardly eliminated.

Moreover, when the mixing amount of the pore forming agent to the resin material is excessively large, the rate of pore of the aeration member 20 becomes excessively high, and accordingly, there is a possibility that the strength of the aeration member 20 is reduced.

### (Molding process)

In the molding process, a molding processing applied to the mixed product obtained in the mixing process into a desired shape, to thereby obtain a molded item. The molding method is not particularly limited; for example, a method, such as compression molding, transfer molding, injection molding, extrusion molding or cast molding can be used.

Moreover, in the molding process of the exemplary embodiment, the molding temperature is set at the temperature capable of molding the resin material and at which at least part of the pore forming agent is melted and the melted parts communicate with each other.

Here, for example, if PBT is selected as the resin material, and pentaerythritol and at least one selected from ethylene glycol, propylene glycol, glycerin, polyethylene glycol and polypropylene glycol are selected as the pore forming agent, in the mixing process, first, the mixed product obtained in the mixing process is extruded by an extruder, and thereafter, cooled and cut to be pelletized. Subsequently, by use of a publicly-known injection molder, injection molding of the pelletized mixed product into the desired shape is performed, to thereby obtain the molded item.

### (Extraction process)

In the extraction process, the molded item obtained in the molding process is dipped into a solvent, in which the above-described resin material is not dissolved but the pore forming agent is dissolved, to cause the pore forming agent to be dissolved in the solvent, to thereby form the small pore diameter structures 21 and the large pore diameter structures 22 communicating with each other in the resin material that is not dissolved and remained. Then, by drying the solvent by a dryer or the like, the aeration member 20 including the small pore diameter structures 21 and the large pore diameter structures 22 is obtained.

Though there is a difference depending on the resin material and the pore forming agent, specific examples of the solvent used in the extraction process include: water, glycol, glycol ether, polymeric alcohol, fatty acid, fatty acid ester, glycol ester, mineral oil, petroleum, alcohol ethoxylate, polyoxyethylene ester, grycerol, and grycerol ester.

As described above, if pentaerythritol and at least one selected from ethylene glycol, propylene glycol, glycerin, polyethylene glycol and polypropylene glycol are selected, it is preferable to select water as the solvent used for extraction.

In the extraction process, it is preferable to extract the pore forming agent in a state of heating the above-described solvent, for example, up to the extent of 60°C to 100°C. By heating the solvent, extraction of the pore forming agent into the solvent can be promoted, and remaining of the pore forming agent in the resin material is suppressed.

### (Water repellency and oil repellency treatment)

Note that, if the water repellent and oil repellent coating is provided to the aeration member 20 as described above, subsequently, water repellency and oil repellency treatment is applied to the aeration member 20 obtained in the extraction process.

The method of water repellency and oil repellency treatment is not particularly limited, and specific examples thereof include: a method of dipping the aeration member 20, in which the small pore diameter structures 21 and the large pore diameter structures 22 are formed, into a water repellency and oil repellency treatment agent and drying thereafter; and a method of coating the aeration member 20 with the water repellency and oil repellency treatment agent and drying thereafter. As the method of applying the water repellency and oil repellency treatment agent, for example, a spray method, a spin coating method, a dipping method, a roll coater method or the like can be used.

Moreover, the water repellency and oil repellency treatment is not particularly limited; however, as described above, a water repellency and oil repellency treatment of silicone series or fluoride series can be used.

Here, though a difference occurs depending on the kinds of the resin material or the pore forming agent used as the aeration member 20, if the aeration member 20 is prepared only by the above-described extraction method, the thickness t1 of the aeration member 20 is preferably 1 mm or more. If the aeration member 20 with the thickness t1 of 1 mm or less is formed by the extraction method, the open-cell structure of the small pore diameter structures 21 and the large pore diameter structures 22 is apt to be deformed on the surface of the aeration member 20, and therefore, there is a possibility that discharge of water vapor from the housing interior 8 to the exterior of the vehicle lamp 1 becomes insufficient.

Note that, in this case, for example, by grinding or cutting the surface of the aeration member 20 prepared by the extraction method, it is possible to form the aeration member 20 with the thickness of less than 1 mm while suppressing insufficient discharge of water vapor.

Note that the manufacturing method of the aeration member 20 of the exemplary embodiment is not limited to the above-described methods; for example, the small pore diameter structures 21 and the large pore diameter structures 22 may be formed by mixing a foaming agent into a resin material to foam thereof. In this case, for example, by adjusting the type, additive amount, foaming time, foaming temperature and the like of the foaming agent, it is possible to form the small pore diameter structures 21 and the large pore diameter structures 22 having structures communicating with each other.

Moreover, after a foam of the closed-cell type, in which the small pore diameter structures 21 and the large pore diameter structures 22 do not communicate with each other, is obtained, the aeration member 20 having the open-cell structure, in which the small pore diameter structures 21 and the large pore diameter structures 22 communicate with each other, may be formed by, for example, applying mechanical deformation to the foam, to thereby break the bubbles.

### [Examples]

Subsequently, the present invention will be described based on the examples. Note that the present invention is not limited to the following examples.

### [Example 1]

By use of PBT as the resin material, and pentaerythritol and glycerin as the pore forming agent, and according to the above-described extraction method, the aeration member 20 in a cylindrical columnar shape with the aeration portion area (planar area) of 300 mm² and the thickness of 1 mm was prepared.

The obtained aeration member 20 had the open-cell structure, in which the small pore diameter structures 21 and the large pore diameter structures 22 communicated with each other, the pore diameter of the small pore diameter structure 21 (first pore diameter D1) was 5 µm, and the pore diameter of the large pore diameter structure 22 (second pore diameter D2) was 30 µm.

### [Examples 2 to 4]

The aeration members 20 were prepared in a similar manner to Example 1 except that the thickness of the aeration member 20 was 2 mm (Example 2), 5 mm (Example 3) and 10 mm (Example 4).

### (Comparative example 1)

By stretching a polytetrafluoroethylene (PTFE) film, a PTFE stretching film with the thickness of 0.05 mm was obtained. In the obtained PTFE stretching film, plural pores of the substantially uniform pore diameter were formed, and the pore diameter was 10 µm.

### (Comparative example 2)

A mold made of aluminum was filled with polymeric polyethylene powder, the mold was heated until the surface temperature of the mold became 175°C and then cooled to the room temperature, and thereby, a polyethylene porous body in a cylindrical columnar shape with the aeration portion area of 300 mm² and the thickness of 1 mm was obtained. In the obtained polyethylene porous body, plural pores of the substantially uniform pore diameter were formed, and the pore diameter was 10 µm.

### (Comparative example 3)

A polyethylene porous body was obtained in a similar manner to Comparative example 2 except that the thickness thereof was 2 mm.

Subsequently, the aeration members 20 obtained by Examples 1 to 4 and Comparative examples 1 to 3 were attached to the vehicle lamp 1 on which humidity control was performed as follows, and an evaluation test of a defogging property was performed. As the vehicle lamp 1, a head lamp for a medium-sized vehicle with an internal volume of 6900 cc (a head lamp of a 2011 model Genesis Coupé manufactured by Hyundai Motor Company) was used.

### (Humidity control)

First, the vehicle lamp 1 in a state all the openings, such as the aeration opening 9 and the like, were opened was left in a hot-dry condition (temperature: 80±2°C, relative humidity (RH): 10%) for 2 hours. Subsequently, while the aeration opening 9 and the like were left open, the vehicle lamp 1 was left in an ordinary temperature and pressure condition (temperature: 15°C to 35°C, RH: 45% to 75%) for 1 hour.

Thereafter, while the aeration opening 9 and the like were left open, the vehicle lamp 1 was left in a humidity control condition (temperature: 38°C, RH: 70%) for 1 hour, to thereby control the humidity in the housing interior 8 of the vehicle lamp 1.

### (Defogging property test)

To the aeration opening 9 of the vehicle lamp 1immediately after the above-described humidity control was performed, the aeration member 20 obtained by each of Examples 1 to 4 and Comparative examples 1 to 3 was attached via a socket (support member 11), and openings other than the aeration opening 9 were closed. Then, after lighting for 20 minutes, the vehicle lamp 1 was turned off.

Thereafter, by use of a hose with an internal diameter of 19 mm, water injection to the lens 3 of the vehicle lamp 1 in a turn-off state was conducted for 3 minutes. Note that water of 10±2°C water temperature was used while setting the water pressure at 100±20 kPa. Moreover, water injection was conducted while the tip of the hose was in a state being separated 10 cm from the lens 3 of the vehicle lamp 1 and water injection angle was changed from the vertical direction (90° upward with respect to the horizontal direction) to 30° upward with respect to the horizontal direction.

Subsequently, after lighting of the vehicle lamp 1 for 10 minutes, fogging state of the lens 3 and presence or absence of infiltration of water into the housing interior 8 were observed. Then, if there was fogging of the lens 3, observation was continued, and the time required to eliminate the fogging (defog) was measured. Note that whether or not the fogging of the lens 3 was eliminated was determined by taking a photograph of the lens 3 from the front side and making visual observation of the photograph.

The test results for Examples 1 to 4 and Comparative examples 1 to 3 are shown in Table 1.

**[Table 1]**

| | Material | Thickness (mm) | Aeration portion area (mm²) | Pore diameter (µm) | | Infiltration of water | Fogging elimination time (min) |
|---|---|---|---|---|---|---|---|
| | | | | Small pore diameter structure | Large pore diameter structure | | |
| Example 1 | PBT | 1 | 300 | 5 | 30 | No | 3 |
| Example 2 | PBT | 2 | 300 | 5 | 30 | No | 3 |
| Example 3 | PBT | 5 | 300 | 5 | 30 | No | 3 |
| Example 4 | PBT | 10 | 300 | 5 | 30 | No | 3 |
| Comparative example 1 | PTFE | 0.05 | 300 | 10 | | No | 30 |
| Comparative example 2 | PE | 1 | 300 | 10 | | No | 8 |
| Comparative example 3 | PE | 2 | 300 | 10 | | No | 15 |

As shown in Table 1, in the aeration members 20 of Examples 1 to 4 including the open-cell structures of the small pore diameter structures 21 and the large pore diameter structures 22, the time taken to eliminate the fogging of the lens 3 was 3 minutes or less; therefore, it was confirmed that the fogging could be eliminated quickly when fogging occurred in the lens 3. To put it another way, in the aeration members 20 of Examples 1 to 4, it was confirmed that a good defogging property could be achieved.

Moreover, in the aeration members 20 of Examples 1 to 4, infiltration of water (liquid water) into the housing interior 8 was not found. In other words, in the aeration members 20 of Examples 1 to 4, it was confirmed that the good defogging property could be achieved while suppressing infiltration of liquid water into the housing interior 8.

To the contrary, in the aeration members of Comparative examples 1 to 3, which were formed of porous bodies with plural pores of substantially the same diameters, though infiltration of liquid water into the housing interior 8 could be suppressed, the time taken to eliminate the fogging of the lens 3 was 8 minutes or more; accordingly, it was confirmed that it required a long time to eliminate the fogging of the lens 3 as compared to the aeration members 20 of Examples 1 to 4.

### Reference Signs List

- 1: Vehicle lamp
- 2: Housing
- 3: Lens
- 8: Housing interior
- 9: Aeration opening
- 10: Aeration unit
- 20: Aeration member
- 21: Small pore diameter structure
- 22: Large pore diameter structure

## Claims

1. An aeration member formed of a porous body that discharges water vapor in an interior of a closed lamp housing, comprising:
a small pore diameter structure that prevents infiltration of liquid water and a contaminant into the interior of the lamp housing, and forms a flow path for discharging the water vapor from the interior of the lamp housing to an exterior; and
a large pore diameter structure having a larger diameter than that of the small pore diameter structure, the large pore diameter structure being provided in communication with the small pore diameter structure.

2. The aeration member according to claim 1, wherein a pore diameter of the small pore diameter structure is 0.5 µm or more and 50 µm or less.

3. The aeration member according to claim 1, wherein a pore diameter of the large pore diameter structure is 5 µm or more and 100 µm or less.

4. An aeration member formed of a porous body that performs aeration between an interior of a closed housing and an exterior, comprising:
a small pore diameter structure that prevents infiltration of liquid water and a contaminant into the interior of the housing, and causes water vapor to permeate from the interior of the housing to the exterior; and
a large pore diameter structure having a larger diameter than that of the small pore diameter structure,
wherein the aeration member is formed as a molded article with a thickness having a self-standing property as a shape.

5. The aeration member according to claim 4, wherein the thickness of the aeration member is 10 mm or less.

6. The aeration member according to claim 5, wherein the thickness of the aeration member is 1 mm or more.

7. The aeration member according to claim 5 or 6, wherein the aeration member is a molded article with a concave and a convex, and the concave and the convex increase a surface area and widen a permeation area of the water vapor.

8. An aeration device for discharging water vapor in a closed lamp, comprising:
a lamp housing that is closed and includes at least an aeration opening; and
an aeration member provided to the aeration opening,
wherein the aeration member comprises:
a small pore diameter structure in which a pore diameter is 0.5 µm or more and 50 µm or less; and
a large pore diameter structure that is provided in communication with the small pore diameter structure and has a larger diameter than that of the small pore diameter structure.
